# EUROPÄISCHE PATENTSCHRIFT

(11) **EP 1 609 733 B1**
(45) Veröffentlichungstag und Bekanntmachung des Hinweises auf die Patenterteilung: **17.09.2008**
(21) Anmeldenummer: 04014794.4
(22) Anmeldetag: 24.06.2004
(51) Int. Cl.: B65D 39/08

(54) **Tankstutzen für Einfüllöffnungen von Tanks**
Tank filler neck
Tubulure de remplissage d'un réservoir

(43) Veröffentlichungstag der Anmeldung: 28.12.2005
(73) Patentinhaber: Promens Hockenheim GmbH, 68766 Hockenheim (DE)
(72) Erfinder: Scheder, Uwe, 69488 Birkenau (DE)
(74) Vertreter: Schmid, Rudolf

(56) Entgegenhaltungen:
- EP-A- 0 229 260
- EP-A- 0 304 579
- WO-A-91/05712
- US-A- 2 916 311

## Beschreibung

Die Erfindung betrifft Tankstutzen für Einfüllöffnungen von Tanks mit den Merkmalen des Oberbegriffs des Anspruchs 1.

Aus der EP 0304579 ist ein Tankstutzen bekannt mit den Merkmalen des Oberbegriffs des Anspruchs 1.

Aus der G 94 06 095.9 ist ein Tankstutzen für Einfüllöffnungen von Tanks bekannt mit einer Verschlusshülse, die unter Einschluss eines Dichtmittels verdrehsicher auf einem Halsansatz der Einfüllöffnung angeordnet ist. Die Verschlusshülse ist als hohlzylindrischer Körper ausgebildet mit einer außen an der Einfüllöffnung anliegenden Außenwand, einem im wesentlichen innenliegenden Verschlussanteil und einem separaten Innenring, der zur Auflage auf dem Halsansatz eine radial zur Einfüllöffnung gerichtete Auflagefläche mit Vorrichtungen zur Montage auf dem Halsansatz aufweist. Der hohlzylindrischer Körper und der Innenring dieses Standes der Technik sind jeweils gesondert gegen Verdrehung am kompliziert geformten und daher aufwendig herzustellenden Halsansatz gesichert. Die an der Einfüllöffnung anliegende Außenwand des hohlzylindrischen Körpers soll für die Montage auf den Halsansatz des Tanks biegsam sein und dabei dennoch mit dem Dichtmittel den Tank absolut zuverlässig nach außen abdichten. Insbesondere Tankstutzen für Einfüllöffnungen von Tanks aus recyclefähigem Kunststoff sind hinsichtlich der hohen Anforderungen an Dichtigkeit problematisch.

Aufgabe der Erfindung ist es, Tankstutzen für Einfüllöffnungen von Tanks zu schaffen, die einfach und kostengünstig im Aufbau sind, bei verbesserter Dichtigkeit, Stabilität und Lebensdauer.

Die Lösung erfolgt mit Tankstutzen für Einfüllöffnungen von Tanks mit den Merkmalen des Anspruchs 1. Vorteilhafte Ausgestaltungen der Erfindung sind in den Unteransprüchen dargestellt.

Gemäß der Erfindung ist ein Tankstutzen für Einfüllöffnungen von Tanks, insbesondere von Tanks aus recyclefähigem Kunststoff, vorgesehen mit einer Verschlusshülse, die unter Einschluss eines Dichtmittels verdrehsicher auf einem Halsansatz der Einfüllöffnung angeordnet ist, wobei die Verschlusshülse als hohlzylindrischer Körper ausgebildet ist mit einer außen an der Einfüllöffnung anliegenden Aussenwandung, einem im wesentlichen innenliegenden Verschlussanteil und einem separaten Innenring, der zur Auflage auf dem Halsansatz eine radial zur Einfüllöffnung gerichtete Auflagefläche mit Vorrichtungen zur Montage auf dem Halsansatz aufweist. Erfindungsgemäß weist der separate Innenring eine koaxial zur Einfüllöffnung gerichtete Krempe auf, die flächig an dem hohlzylindrischen Körper innen anliegend ist und zumindest an einem Punkt in radialer Richtung so mit dem hohlzylindrischen Körper verpresst ist, dass lokale Verformungen um den mindesten einen Punkt den separaten Innenring fest zum hohlzylindrischen Körper positionieren. Die koaxial zur Einfüllöffnung flächig an dem hohlzylindrischen Körper innen anliegende Krempe verbessert vorteilhaft die Stabilität der außen an der Einfüllöffnung anliegenden Außenwand des hohlzylindrischen Körpers und damit deren Eignung für verbesserte Dichtigkeit des erfindungsgemäßen Tankstutzens. Die gemäß der Erfindung in radialer Richtung durch Verpressen herbei geführten lokalen Verformungen in Krempe und hohlzylindrischem Körper, die den separaten Innenring zuverlässig und fest zum hohlzylindrischen Körper positionieren, sind kostengünstig herzustellen, versteifen Innenring und hohlzylindrischen Körper für verbesserte Stabilität und Dichtigkeit und sind lang andauernd korrosionsbeständig im Gegensatz etwa zu Punktschweißungen, wie vorgeschlagen in der EP 0 229 260 für Verschlusshülse und Verankerungsring, die insbesondere in Verbindung mit aggressiven Tankflüssigkeiten, zu Korrosion von Verschlusshülse und Verankerungsring in der Folge zu versagender Dichtigkeit und damit zu versagender Gesamtfunktion von Tankstutzen und Tank führen. Der Tankstutzen gemäß der Erfindung mit Innenring und hohlzylindrischem Körper ist kostengünstig herstellbar. Der erfindungsgemäße Tankstutzen erfüllt insbesondere die hohen Anforderungen hinsichtlich Dichtigkeit von Tanks aus recyclefähigem Kunststoff.

Gemäß einer bevorzugten Ausgestaltung der Erfindung ist die Krempe über 360° flächig an dem hohlzylindrischen Körper innen anliegend für verbesserte rotationssymmetrische Stabilität und Dichtigkeit.

Gemäß einer weiteren bevorzugten Ausgestaltung der Erfindung ist das Dichtmittel eine zur Einfüllöffnung koaxiale Radialdichtung, ein O- oder ein Quad-Ring, etc., die radial an der Aussenwandung innen abdichtet und in axialer Richtung der Einfüllöffnung von der Auflagefläche des Innenrings am Halsansatz gehalten ist, so dass das Dichtmittel von der Auflagefläche des Innenrings nicht gepresst wird.

Gemäß einer weiteren bevorzugten Ausgestaltung der Erfindung umfassen die Vorrichtungen zur Montage des Innenrings auf dem Halsansatz mindestens eine Blechbefestigung, die formschlüssig an den Innenumfang des Halsansatzes angepasst ist und sich insgesamt nur über einen Bruchteil des Umfangs der Einfüllöffnung erstreckt.

Gemäß einer weiteren bevorzugten Ausgestaltung der Erfindung weist die Blechbefestigung mindestens einen Y-förmig gespreizten Schenkel, einen Steg- und einen Montageabschnitt auf und der Montageabschnitt mit einer Bohrung für eine Schraube zur Auflagefläche des Innenrings versehen ist. Die Blechbefestigungen sind kostengünstig herstellbar und können kostengünstig radial innenliegend in den Halsansatz der Einfüllöffnung eingegossen oder eingepresst werden für eine mittels vorzugsweise Schrauben lösbare Montage des Innenrings mit dem hohlzylindrischem Körper auf dem Halsansatz der Einfüllöffnung.

Die Erfindung wird im Folgenden anhand eines bevorzugten Ausführungsbeispiels dargestellt. Es zeigen:
- Fig. 1: eine teilweise aufgeschnittene Ansicht des Tankstutzens der Erfindung,
- Fig. 2: einen Querschnitt durch den Tankstutzen der Erfindung,
- Fig. 3: eine Draufsicht auf den Tankstutzen der Erfindung, und
- Fig. 4: vergrößerte Ansichten einer Blechbefestigung des Tankstutzens der Erfindung.

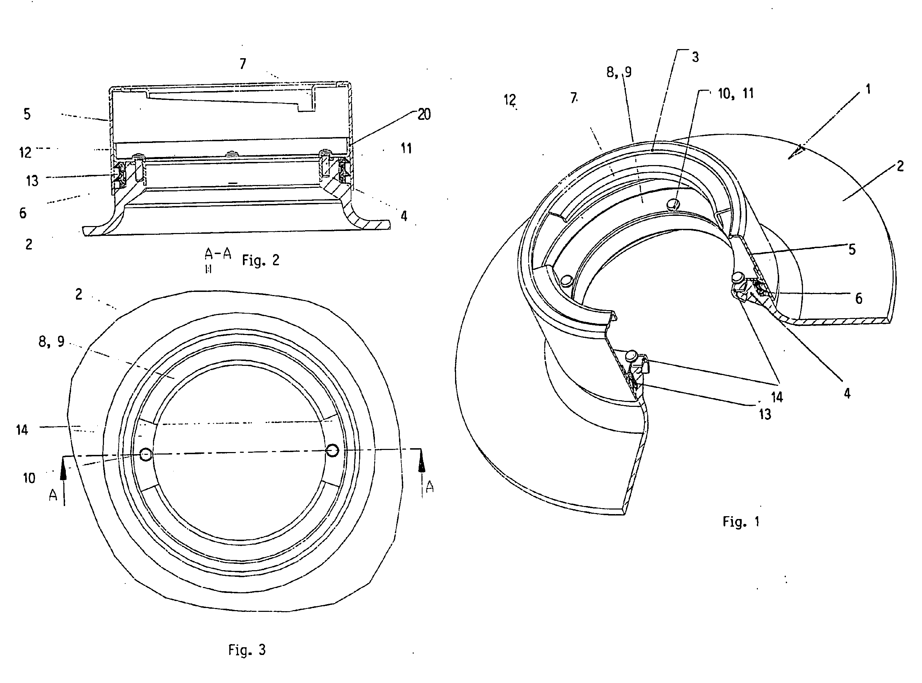

Fig. 1, 2, 3: Ein Tankstutzen 1 einer Einfüllöffnung eines Tanks 2 aus recyclefähigem Kunststoff weist eine metallische Verschlusshülse 3 auf, die verdrehsicher auf einem Halsansatz 4 der Einfüllöffnung angeordnet ist. Die Verschlusshülse 3 ist als hohlzylindrischer Körper 5 ausgebildet mit einer außen am Halsansatz 4 der Einfüllöffnung anliegenden Außenwand 6, einem im wesentlichen innenliegenden Verschlussanteil 7 mit Bajonettverschluss für einen Deckel (nicht dargestellt) und einen separaten, im wesentlichen rotationssymmetrischen Innenring 8, der zur Auflage auf dem Halsansatz 4 eine radial zur Einfüllöffnung gerichtete Auflagefläche 9 mit Bohrungen 10 zur Aufnahme von Linsen-Blechschrauben 11 als Vorrichtungen zur Montage auf dem Halsansatz 4 aufweist.

Der separate Innenring 8 weist eine koaxial zur Einfüllöffnung gerichtete Krempe 12 auf, die im wesentlichen über 360° flächig an dem hohlzylindrischen Körper 5 innen anliegend ist und punktweise in radialer Richtung so mit dem hohlzylindrischen Körper 5 verpresst ist, dass lokale Verformungen (nicht dargestellt) um den mindesten einen Punkt 20 der Verpressung den separaten Innenring 8 fest am hohlzylindrischen Körper 5 positionieren.

Eine zur Einfüllöffnung koaxiale Radialdichtung 13 dichtet mit zwei radialen Lippen innen an der Außenwand 6 ab und ist in axialer Richtung der Einfüllöffnung von der Auflagefläche des Innenrings 8 am Halsansatz 4 gehalten.

Alternativ können ein O-Ring oder ein Quad-Ring, etc. an der Außenwand 6 abdichten.

Zur Montage des Innenrings 8 auf dem Halsansatz 4 sind zwei Blechbefestigungen 14 formschlüssig an den Innenumfang des Halsansatzes 4 angepasst.

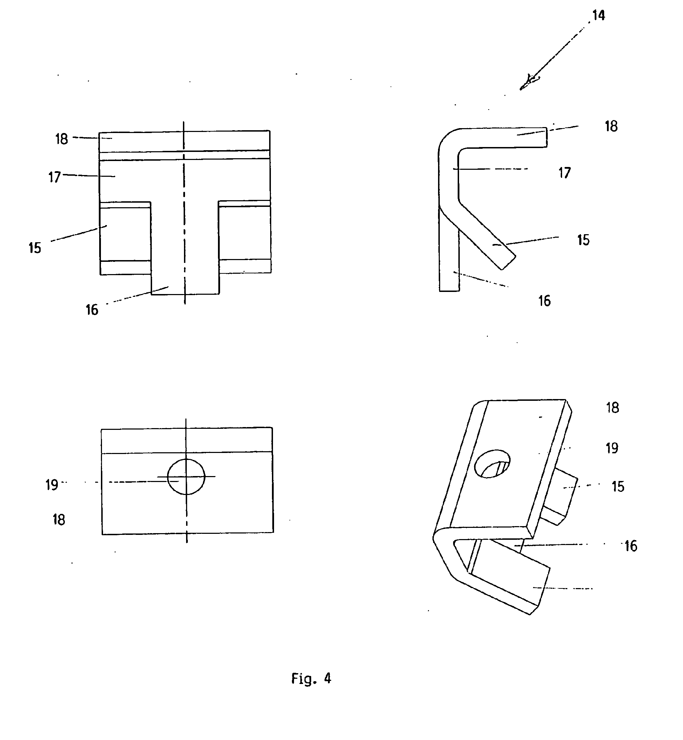

Fig. 4: Die Blechbefestigungen 14 sind zur Anlage an einen Umfangsausschnitt von ca. 10° des Innenumfangs des Halsansatzes 4 abgemessen und weisen Y-förmig gespreizte Schenkel 15, 16, einen Steg- 17 und einen Montageabschnitt 18 auf. Der Montageabschnitt 18 ist mit einer Bohrung 19 für eine Schraube 11 zur verdrehfesten Befestigung der Auflagefläche des Innenrings 8 am Halsansatz 4 vorgesehen.

### Verfahren zur Montage des Tankstutzens

Der Halsansatz 4 des Tanks 2 aus recyclefähigem Kunststoff wird geformt mit der Nut für die Radialdichtung 13 und Sacklöchern für Linsen-Blechschrauben 11. Auf die Sacklöcher für die Linsen-Blechschrauben 11 werden die zwei Blechbefestigungen 14 mit den Y-förmig gespreizten Schenkeln 15, 16 und Stegabschnitt 17 formschlüssig so an den Innenumfang des Halsansatzes 4 angepasst, dass jeweils die Bohrung 19 im Montageabschnitt 18 koaxial ist zu einem der Sacklöcher für die Linsen-Blechschrauben 11. Radialdichtung 13 wird in die Nut am Halsansatz 4 eingesetzt.

Der Innenring 8 wird mit seiner Krempe 12 flächig an dem hohlzylindrischen Körper 5 innen anliegend punktweise in radialer Richtung mit dem hohlzylindrischen Körper verpresst, die Auflagefläche des Innenrings 8 über die Bohrungen 19 im Montageabschnitt 18 der Blechbefestigungen 14 positioniert, die Außenwand 6 des Tankstutzens 1 über die Radialdichtung 13 und den Halsansatz 4 geschoben bis zur Anlage der Auflagefläche 9 auf dem Halsansatz 4 und mit den Linsen-Blechschrauben 11 der hohlzylindrische Körper 5 in den Sacklöchern des Halsansatzes 4 verdrehsicher und lösbar befestigt.

## Patentansprüche

1. Tankstutzen (1) für Einfüllöffnungen von Tanks (2) mit einer Verschlusshülse (3), die unter Einschluss eines Dichtmittels (13) verdrehsicher auf einem Halsansatz (4) der Einfüllöffnung angeordnet ist, wobei die Verschlusshülse (3) als hohlzylindrischer Körper (5) ausgebildet ist mit einer außen an der Einfüllöffnung anliegenden Außenwand (6), einem im wesentlichen innenliegenden Verschlussanteil (7) und einem separaten Innenring (8), der zur Auflage auf dem Halsansatz (4) eine radial zur Einfüllöffnung gerichtete Auflagefläche (9) mit Vorrichtungen (10, 11) zur Montage auf dem Halsansatz (4) aufweist,
**dadurch, gekennzeichnet, dass** der separate Innenring (8) eine koaxial zur Einfüllöffnung gerichtete Krempe (12) aufweist, die im wesentlichen flächig an dem hohlzylindrischen Körper (5) innen anliegend ist und zumindest an einem Punkt (20) in radialer Richtung so mit dem hohlzylindrischen Körper (5) verpresst ist, dass lokale Verformungen um den mindesten einen Punkt den separaten Innenring (8) fest zum hohlzylindrischen Körper (5) positionieren.

2. Tankstutzen (1) gemäß Anspruch 1, **dadurch gekennzeichnet, dass** die Krempe (12) über 360° flächig an dem hohlzylindrischen Körper (5) innen anliegend ist.

3. Tankstutzen (1) gemäß Anspruch 1, **dadurch gekennzeichnet, dass** das Dichtmittel eine Radialdichtung (13), ein O-Ring oder ein Quad-Ring ist, die radial an der Außenwand (6) innen und axial an der Auflagefläche (9) des Innenrings (8) anliegend ist.

4. Tankstutzen (1) gemäß Anspruch 1, **dadurch gekennzeichnet, dass** die Vorrichtungen (10, 11) zur Montage des Innenrings (8) auf dem Halsansatz (4) mindestens eine Blechbefestigung (14) umfassen, die formschlüssig an den Innenumfang des Halsansatzes (4) angepasst ist und sich insgesamt nur über einen Bruchteil des Umfangs der Einfüllöffnung erstreckt.

5. Tankstutzen (1) gemäß Anspruch 4, **dadurch gekennzeichnet, dass** die Blechbefestigung (14) mindestens einen Y-förmig gespreizten Schenkel (15, 16), einen Steg- (17) und einen Montageabschnitt (18) aufweist und der Montageabschnitt (18) mit einer Bohrung (19) für eine Schraube (11) zur Auflagefläche (9) des Innenrings (8) versehen ist.

6. Tankstutzen (1) gemäß Anspruch 1, **dadurch gekennzeichnet, dass** er geeignet ist für aus recyclefähigem Kunststoff hergestellte Tanks.

## Claims

1. Tank filler neck (1) with a locking cap (3) mounted torsionproof on a neck stub (4) of the filler-hole including sealing means (13), the locking cap (3) being formed as a hollow cylindrical body (5) with an external wall (6) adjacent to the outside of the filler-hole, a locking part (7) mounted substantially inside and a separate inner ring (8) comprising a contact surface (9) radially directed towards the filler-hole with devices (10, 11) for mounting to the neck stub (4), **characterised in that** the separate inner ring (8) comprises a flange (12) coaxially directed towards the filler-hole, substantially flat adjacent to the inside of the hollow cylindrical body (5) and being pressed radially to at least one point (20) of the hollow cylindrical body (5) that local deformations at the at least one point position the separate inner ring (8) firmly to the hollow cylindrical body (5).

2. Tank filler neck (1) according to claim 1, **characterised in that** the flange (12) is flat adjacent to the inside of the hollow cylindrical body (5) over 360°.

3. Tank filler neck (1) according to claim 1, **characterised in that** the sealing means is a radial sealing (13), an O-gasket or a Quad-gasket radially adjacent to the inside of the external wall (6) and axially on the contact surface (9) of the inner ring (8).

4. Tank filler neck (1) according to claim 1, **characterised in that** the devices (10, 11) for mounting of the inner ring (8) to the neck stub (4) comprise at least a tin fixation (14) adapted to the shape of the inner periphery of the neck stub (4) and extending entirely only over a part of the periphery of the filler-hole.

5. Tank filler neck (1) according to claim 4, **characterised in that** the tin fixation (14) comprises at least a Y-shaped leg (15, 16), a bar (17) and a mounting portion (18), the mounting portion (18) being provided with a boring (19) for a screw (11) to the contact surface (9) of the inner ring (8).

6. Tank filler neck (1) according to claim 1, **characterised by** being suitable for tanks fabricated from recyclable plastics.

## Revendications

1. Tubulure (1) de remplissage de réservoirs (2), à manchon de fermeture (3), placée à la base d'un col (4) de l'orifice de remplissage sous inclusion d'un agent d'étanchéité (13) l'empêchant de se dévisser, où ledit manchon de fermeture (3) est constitué d'un corps cylindrique creux (5) avec une paroi extérieure (6) connexe à l'orifice de remplissage, d'une partie de fermeture (7) située essentiellement à l'intérieur et d'un anneau intérieur distinct (8) qui présente une surface d'appui (9) sur ladite base du col (4) qui est orientée radialement par rapport audit orifice de remplissage et présente des dispositifs (10,11) de montage sur ladite base du col (4),
**caractérisée en ce que**
l'anneau intérieur distinct (8) comporte un rebord (12) orienté coaxialement par rapport à l'orifice de remplissage, ledit rebord épousant en grande partie la surface intérieure du corps cylindrique creux (5) et étant pressé radialement en au moins un point avec ledit corps cylindrique creux (5) de manière que les déformations locales en au moins ce point positionnent solidement l'anneau intérieur distinct (8) par rapport au corps cylindrique creux (5).

2. Tubulure (1) selon la revendication 1, **caractérisée en ce que** le rebord (12) épouse la surface intérieure dudit corps cylindrique creux (5) sur 360°.

3. Tubulure (1) selon la revendication 1, **caractérisée en ce que** l'agent d'étanchéité est un joint radial (13), un joint torique ou un joint quadrilobe qui épouse radialement l'intérieur de la paroi extérieure (6) et axialement la surface d'appui (9) de l'anneau intérieur (8).

4. Tubulure (1) selon la revendication 1, **caractérisée en ce que** les dispositifs (10, 11) de montage de l'anneau intérieur (8) sur ladite base du col (4) comprennent au moins une fixation crabotée en fer-blanc (14) qui est adaptée à la circonférence intérieure de la base du col (4) et qui ne couvre qu'une fraction de la circonférence de l'orifice de remplissage.

5. Tubulure (1) selon la revendication 4, **caractérisée en ce que** la fixation en fer-blanc (14) comporte au moins une paire de branches d'écartement en Y (15, 16), une section semelle (17) et une section de montage (18) et **en ce que** ladite section de montage (18) présente un alésage (19) pour une vis (11) descendant jusqu'à la surface d'appui (9) de l'anneau intérieur (8).

6. Tubulure (1) selon la revendication 1, **caractérisée en ce qu'**elle est apte pour réservoirs (2) fabriqués en plastique recyclable.
